Europäisches Patentamt

European Patent Office

Office européen des brevets

(19)

(11) **EP 1 447 657 A2**

(12) **EUROPÄISCHE PATENTANMELDUNG**

(43) Veröffentlichungstag:
**18.08.2004 Patentblatt 2004/34**

(51) Int Cl.⁷: **G01N 21/35**, G01N 21/39, G01N 33/22

(21) Anmeldenummer: **04100386.4**

(22) Anmeldetag: **03.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **04.02.2003 DE 10304455**

(71) Anmelder: **SIEMENS AKTIENGESELLSCHAFT**
**80333 München (DE)**

(72) Erfinder:
 • **Bachmaier, Georg**
  **80538, München (DE)**

 • **Henning, Oliver**
  **81667, München (DE)**
 • **Magori, Erhard**
  **85622, Feldkirchen (DE)**
 • **Meixner, Hans**
  **85540, Haar (DE)**
 • **Strzoda, Rainer**
  **81825, München (DE)**
 • **Tump, Christian**
  **80469, München (DE)**

(54) **Verfahren zur Analyse eines Gasgemisches**

(57)    Beim Verfahren zur Analyse eines Gasgemisches

-    wird ein erstes Absorptionsspektrum 2 mindestens eines Zielgases in einem Gasgemisch anhand eins Laser-Spektroskopie Verfahrens gemessen
-    ein Vergleich des ersten Absorptionsspektrums 2 mit dem idealen zweiten Absorptionsspektrum 1

des Zielgases einer Wissensbasis ausgeführt
-    ein Rückschluss über den Energiegehalt des Gasgemisches durch die Abweichung im Sinne einer Verbreiterung des ersten Absorptionsspektrums 2 gegenüber dem idealen Absorptionsspektrum 1 durch die Anwesenheit im Gasgemisch von weiteren Gasen erlaubt.

FIG 1

EP 1 447 657 A2

**Beschreibung**

Die Erfindung betrifft eine spektroskopische Analyse eines Gasgemisches.

Die Gassensorik ist für eine Vielzahl von Aufgaben im Bereich Sicherheit, Komfort und Umweltschutz von besonderer Bedeutung. Auf diesen Gebieten besteht ein großer Bedarf an kostengünstigen und zuverlässigen Gassensoren.

Optische Verfahren auf Basis der Absorptionsspektroskopie im nahen Infrarot (NIR) gewinnen durch zunehmende Verfügbarkeit von Laserdioden mit geeigneten Wellenlängen immer mehr an Bedeutung. Vorteile sind deren Selektivität im Vergleich zu chemischen Sensoren sowie eine hohe Stabilität auch im über Jahre andauernden Betrieb [1].

Die optische Messung erfolgt mittels der Durchstimmung der emittierten Wellenlänge in NIR über Strom und Temperatur. Es werden dabei diskrete, schmalbandige (bei Halbwertsbreiten von weniger als 0,5 nm) Absorptionslinien des jeweiligen Gases vermessen und ausgewertet und den Gasen zugeordnet.

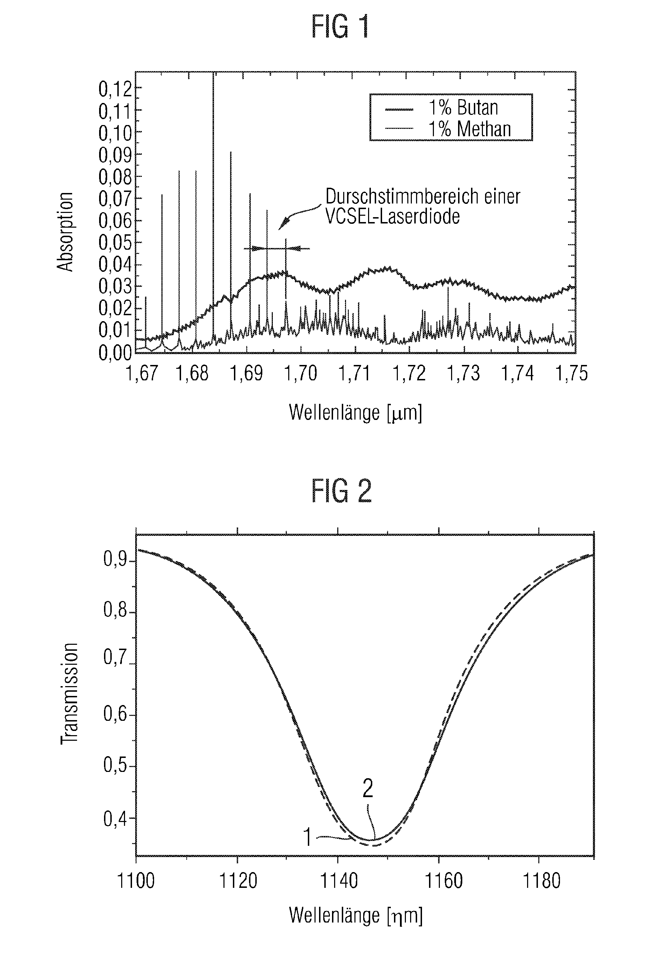

Auf großmolekularen Spezies kann diese Technik derzeit nicht angewendet werden, da der Abstimmbereich der Laserdioden nicht ausreicht, um die charakteristischen spektralen Eigenschaften zu erfassen. **Figur 1** zeigt zwei Absorptionsspektren, jeweils von Butan und von Methan, wobei Methan schmalbandige, ausgeprägte Linien aufweist, welche mit einer herkömmlichen VCSEL-Laserdiode vermessen werden können. Das Butanspektrum hingegen weist keine ausgeprägten Absorptionslinien auf. Es gibt im Durchstimmbereich einer Laserdiode keine verwertbare Struktur im Butanspektrum, die zur einer Butan-Konzentrationsbestimmung ausgewertet werden kann.

Als Alternativ zum obigen Verfahren kann ein Hintergrundspektrum bestimmt werden, d.h. ein Spektrum ohne Zielgas in einer Messzelle. Mit diesem Verfahren ist aber nur eine kurzzeitige Messung möglich, bei der die Hintergrundintensität kurz vor der eigentlichen Messung dadurch bestimmt wird, dass die Messzelle mit einem im betreffenden Wellelängenbereich nicht absorbierenden Gas gespült wird. Dies erfordert eine nachteilige vorherige Spülung der Messzelle, welche nur bei wenigen Messaufgaben erwünscht bzw. durchführbar ist. Die Messung ist dabei nicht langzeitstabil, da die Verschmutzung der Optik auch nicht mehr ausgeglichen werden kann: Die gemessene Konzentration hängt von der Differenz der gemessenen Intensitäten ab. Bei Verschmutzung ist die Differenz kleiner bei sonst gleicher Gas-Konzentration. Ein weiteres Problem wäre die hohe Empfindlichkeit der Sensoren auf Temperaturschwankungen, die ebenfalls die Intensität am Detektor beeinflussen können.

Optische Sensoren für großmolekulare Gase basieren meist auf einer breitbandigen Lichtquelle mit einem nachgeschaltetem monochromatischen Filter. Die erreichbare Wellenlängenauflösung der bisher verfügbaren Geräte ist wesentlich geringer als die, die mit Laserdioden erreicht werden kann, und genügt nicht, um gleichzeitig schmalbandige Absorptionsspektren zu vermessen. Sie neigen zudem zu Querempfindlichkeit gegenüber anderen Gasen, wie z.B. $H_2O$. Diese optischen Sensoren weisen zudem eine geringe Stabilität auf.

Eine weitere Möglichkeit, breitbandigere Spektren zu vermessen, besteht darin, ein FTIR-Spektrometer zu verwenden.
Der Spektrometer ist aber vergleichsweise kostenintensiv.

Die der Erfindung zugrunde liegende Aufgabe besteht also darin, mit einem möglichst einfachen Verfahren und mit herkömmlichen Geräten eine Gasanalyse auch für großmolekulare Gasspezies auszuführen.

Die Aufgabe wird durch die Merkmale des unabhängigen Anspruchs gelöst.

Die Erfindung beruht auf der Erkenntnis, dass die Interaktion großmolekularer Gasspezies, wie z.B. Ethan und höhere Kohlenwasserstoffe mit Gasen, welche weniger C-Atome aufweisen wie z.B. Methan, einen Einfluss auf den Absorptionsspektren der Gase mit weniger C-Atome, welche grundsätzlich einfacher auszuwerten sind, hat.

Die Erfindung nutzt diese Erkenntnis derart aus, dass beim Verfahren zur Analyse eines Gasgemisches

- ein Absorptionsspektrum 2 eines Zielgases eines Gasgemisches anhand eines Laser-Spektroskopie-Verfahrens gemessen wird
- ein Vergleich des Absorptionsspektrums 2 mit dem idealen, aus einer Wissensbasis verfügbaren Absorptionsspektrum 1 des Zielgases ausgeführt wird
- die Abweichung im Sinne einer Verbreiterung des ersten Absorptionsspektrums 2 gegenüber dem idealen Absorptionsspektrum 1 der Wissensbasis durch die Auswirkung der sich auf das erste Absorptionsspektrum auswirkenden weiteren Gase des Gasgemisches ein Rückschluss über den Energiegehalt des Gasgemisches erlaubt.

Es ergibt sich insbesondere der Vorteil, dass mittels eines herkömmlichen Laser-Spektroskopie-Verfahrens auch die Anwesenheit eines Gases, welches im Durchstimmbereich einer Laserdiode keine für sich genommen verwertbare Struktur aufweist, durch seinen Einfluss auf ein bekanntes und auswertbares Absorptionsspektrum detektiert werden kann.

Weitere Vorteile ergeben sich aus den Unteransprüchen und werden anhand des Ausführungsbeispiels, das die Erfindung näher erläutert, angegeben.

Dabei zeigt

**Figur 2**    die Wirkung von Ethan Erdgases auf das Absorptionsspektrum von Methan.

In **Figur 2** zeigt die Kurve 1 (gestrichelte Kurve) die Absorption von 90% Volumen Methan mit Rest $N_2$ (Stickstoff) und die Kurve 2 die Absorption von 90% Volum Methan mit Rest Ethan. Methan ist also in den Gagemischen die Hauptkomponente und kann dadurch im Messverfahren als Zielgas bezeichnet werden. Gezeigt ist die Absorption einer Methanlinie bei 1680 nm, gemessen bei 32°C und 1000 mbar Druck. Die Wellenlängenachse ist in willkürlichen Einheiten geteilt welche den Laserstromstufen des für die Messung eingesetzten Lasers entsprechen Die Kurve 1 entspricht ein nahezu ideales Absorptionsspektrum von Methan, da $N_2$ keine nennenswerte Auswirkung hinsichtlich ihrer Stoßverbreiterung auf die Absorptionskurve von Methan hat. Die Kurve 1 muss dabei nicht auch die Anwesenheit eines weiteren Gases, wie hier $N_2$, wiederspiegeln, sondern kann auch die Absorptionskurve von 100% Methan sein, d.h. ohne Restgas.

Die Kurve 1 kann dabei Teil einer Wissensbasis sein, wobei als Wissensbasis eine Datenbank bestehend aus einer Vielzahl von bekannten Absorptionsspektren, Druck- und Temperaturabhängigkeiten der Spektren verwendet wird, wobei die Druckund Temperaturabhängigkeiten als Werte oder als Funktionen abgespeichert sein können. Aus der Wissensbasis wäre beispielsweise bekannt, dass bei 1000mbar die Druck bzw. Stoßverbreiterung der für die Linienbreite einer Absorptionskurve 1 oder 2 der relevante Mechanismus ist. Anschaulich besteht In diesem Beispiel der Unterschied der beiden Kurven 1 und 2 darin, dass die Kurve 2 von Methan bei der Anwesenheit von Ethan gegenüber Rest $N_2$ flacher und breiter wird.

Es wird bevorzugt, wie in Figur 2 dargestellt, dass die Bereiche der Absorptionslinien der jeweiligen Spektren mitein ander verglichen werden, da diese Bereiche die eindeutigste Struktur aufweisen.

Der Verbreiterungskoeffizient y, der zur Beschreibung der vergrößerten Linienbreite der Kurve 2 verwendet wird, skaliert sich mit dem Umgebungsdruck *p* und der Temperatur *T* wie folgt [2] :

$$\gamma = (\gamma_n + \gamma_0 + \gamma_{coll}(p,T)) \cdot \frac{p}{p_0} \cdot \sqrt{\frac{T_0}{T}}$$

wobei $\gamma_0$ eine natürliche Linienbreite, $\gamma_n$ ein Stoßverbreiterungskoeffizient, abhängig von der Gasart, dessen Absorptionslinie vermessen wird (also in diesem Ausführungsbeispiel Methan), und $\gamma_{coll}(\boldsymbol{P,T})$ ein zusätzlicher Stoßverbreiterungskoeffizient ist, der den Einfluss von zusätzlichen anwesenden Gase beschreibt (Ethan, bzw. höhere Kohlenwasserstoffe), welcher ebenfalls von Druck und Temperatur abhängig ist. Die Information beispielsweise aus [3], dass Einflüsse verschiedener Gase auf den Stoßverbreiterungskoeffizienten für eine Absorptionslinie von Wasser bei 1315nm gemessen werden, würde dabei auch der Wissensbasis zugeordnet werden. Die Stärke des Einflusses dieser zusätzlichen Gase hängt also von der Größe bzw. Masse deren Moleküle ab. Gase mit schweren Molekülen haben auch einen größeren Einfluss auf den Stoßverbreiterungskoeffizienten. Die veränderte Form der Absorptionslinie von Methan kann auch auf Dipol-Dipol Wechselwirkungen, Veränderungen der freien Weglänge durch die Anwesenheit weiterer Gase (wie z.B. Ethan, Propan oder Butan) zurückgeführt werden.

Es ist zudem noch möglich die Konzentration von weiteren Gasen wie beispielsweise Ethan und Propan in einem Gasgemisch durch vermessen ihrer Absorptionslinien, sofern ihre Absorptionsspektren im Durchstimmbereich einer Laserdiode auswertbar sind, sowie deren Auswirkung auf die Absorptionslinienform des Methan-Zielgases zu bestimmten. Die Information aus der Vermessung der Absorptionslinien von den weiteren Gasen Ethan und Propan wird bei der Berechnung des Kurvenfits, die Verbindung der Messpunkte der Kurve 2 von Methan im Ausführungsbeispiel, berücksichtigt. So würden also nur noch die höheren Komponenten ab Butan, deren Konzentrationen nicht gemessen worden sind, direkt durch die Veränderung der Linienform von Methan bestimmt werden um einen Rückschluss über den zusätzlichen Energiegehalt dieser höheren Komponenten zu ermöglichen.

Durch genaues Vermessen der Absorptionslinien (z.B. mittels Kurvenfitalgortihmen) können also bei bekannten Abhängigkeiten der Kurvenform aus der oben beschriebenen Wissensbasis die Konzentrationen zusätzlich anwesender Gase gemessen werden.

Der Energiegehalt der im Gasgemisch befindlichen Gase ist in erster Näherung proportional zur Anzahl der C-Atome der jeweiligen Molekülen. Bei Methan liegt der Energiegehalt bei 35.9 MJ, bei 64.4 MJ und bei Propan bei 123 MJ, jeweils pro Kubikmeter. Der Stoßverbreiterungskoeffizient steigt also in gleicher Weise mit der Anzahl der C-Atome der jeweiligen Moleküle an. Es ist möglich, den Energiegehalt (Brennwert) und nicht die Konzentration der einzelnen Gase zu bestimmen, wobei allein die Bestimmung der Linienverbreiterung von Methan oder eines auswählbaren Zielgases ausreicht um zum Brennwert des Gasgemisches zu gelangen, da diese direkt proportional zum Energiegehalt aller im Gasgemisch vorliegenden höheren Kohlenwasserstoffe ist.

Es wird bevorzugt, das Absorptionsspektrum insbesondere von Methan anhand eines "Tunable Diode Laser Spectroscopy" Verfahrens abzutasten, da dieses Spektrum im Durchstimmbereich einer Laserdiode eine verwertbare Struktur mit deutlichen, schmalbandigen, ausgeprägten Linien aufweist. Da Erdgas überwiegend aus Methan besteht, ist die Auswahl die Absorptionslinien gerade dieses Gases zu messen für die Bestimmung des Energieinhalts des Gasgemisches anhand des genannten erfinderischen Verfahrens besonders geeignet.

Das Verfahren kann selbstverständlich mittels einer Messküvette zur Aufnahme des Gasgemisches, eines IR-Sensors, einer Laserquelle und einer Datenbank in Verbindung mit einem Rechner ausgeführt werden.

Zudem wird bevorzugt, dass der Vergleichsbereich zweier Absorptionsspektren aus dem Bereich der ausgeprägten Absorptionslinien der Absorptionsspektren ausgewählt wird da dieser Bereich die deutlichste Struktur zeigt.

Literaturverzeichnis

[1] Erhard Magori. "Entwicklung eines Sensorsystems zur Detektion von Gasen mit Nahinfrarot-Laserdioden" Universität der Bundeswehr München, 2000

[2] W. Demtröder. Laser Spectroscopy, 2nd edition. Springer Verlag Berlin, 1998

[3] S.J. Davis W.J. Kessler P.B. Keating. "Progress in the Development of Sensors for COIL Devices" The International Society for Optical Engineering. SPIE Paper No. 3931A24, 2000

**Patentansprüche**

1. Verfahren zur Analyse eines Gasgemisches, bei dem

   - ein erstes Absorptionsspektrum (2) mindestens eines Zielgases in einem Gasgemisch anhand eines Laser-Spektroskopie Verfahrens gemessen wird
   - ein Vergleich des ersten Absorptionsspektrums (2) mit einem zweiten, idealen, aus einer Wissensbasis verfügbaren Absorptionsspektrum (1) des Zielgases ausgeführt wird
   - die Abweichung im Sinne einer Verbreiterung des ersten Absorptionsspektrums (2) gegenüber dem idealen zweiten Absorptionsspektrum (1) der Wissensbasis ein Rückschluss über den Energiegehalt des Gasgemisches durch die sich auf das erste Absorptionsspektrum auswirkenden weiteren Gase erlaubt.

2. Verfahren nach Anspruch 1, bei dem als Wissensbasis eine Datenbank, welche eine Vielzahl von bekannten Absorptionsspektren und Abhängigkeitsfunktionen der Absorptionsspektren von Druck und Temperatur beinhaltet, eingesetzt wird.

3. Verfahren nach einem der Ansprüche 1 oder 2, bei dem Bereiche der beiden Absorptionsspektren nach Absorptionslinien ausgewählt werden und diese Bereiche miteinander verglichen werden.

4. Verfahren nach Anspruch 3, bei dem der Wellenlängenbereich der Absorptionslinien den Wellenlängenbereich des von einer VSCSEL- Diode ausstrahlbaren Lasers entspricht.

5. Verfahren nach einem der vorhergehenden Ansprüche, bei dem die Auswirkung auf die Absorptionslinie eines ersten Zielgases durch die Anwesenheit von weiteren Zielgasen deren Konzentrationen gemessen worden sind bestimmt wird und die zusätzliche Veränderung der Absorptionslinie des ersten Zielgases auf die Anwesenheit weiterer Gase, deren Konzentrationen nicht gemessen worden sind, zurückzuführen ist und somit der Energiegehalt des Gasgemisches bestimmt wird.

## FIG 1

## FIG 2